# EUROPÄISCHE PATENTSCHRIFT

(11) **EP 0 492 202 B1**
(45) Veröffentlichungstag und Bekanntmachung des Hinweises auf die Patenterteilung: **03.04.1996**
(21) Anmeldenummer: 91120879.1
(22) Anmeldetag: 05.12.1991
(51) Int. Cl.: H04B 1/16, H03D 1/22

(54) **Schaltungsanordnung in Stereodekodern zur Erzeugung eines digitalen Signals**
Integrated circuit in stereo decoders for generating a digital signal
Circuit intégré dans décodeurs stéréo pour engendrer un signal numérique

(30) Priorität: 24.12.1990 DE 4041852
(43) Veröffentlichungstag der Anmeldung: 01.07.1992
(73) Patentinhaber: TEMIC TELEFUNKEN microelectronic GmbH, D-74072 Heilbronn (DE)
(72) Erfinder: Rebel, Reimund, W-7519 Eppingen-Rohrbach (DE)
(74) Vertreter: Maute, Hans-Jürgen, Dipl.-Ing.

(56) Entgegenhaltungen:
- US-A- 3 962 551
- US-A- 4 506 376
- JOURNAL OF THE AUDIO ENGINEERING SOCIETY Bd. 33, Nr. 9, September 1985, NEW YORK US,Seiten 669 - 673;TAKAHASHI ET AL. 'Application of Walsh functions to an FM stereo demodulator.'

## Beschreibung

Die Erfindung betrifft einen integrierten Stereodekoder mit einer Schaltungsanordnung gemäß dem Oberbegriff des Anspruchs 1 zur Erzeugung eines digitalen Schaltsignals, welches zur Stereodekodierung oder zur Pilottonunterdrückung verwendet wird.

In integrierten Stereoempfängern werden vielfältig digital erzeugte Signale benötigt, wie z. B. als Schaltimpulse für den Stereodekoder oder zur Pilottonunterdrückung. Im allgemeinen werden diese digitalen Signale durch Oszillatoren und duale Frequenzteilerstufen in Phase-locked-loops erzeugt, die für eine bestimmte Phasenlage der erzeugten Rechtecksignale zum 19 kHz Pilotton des abgestimmten Stereosenders sorgen. Rechteckschwingungen haben jedoch den Nachteil, daß in ihrem Frequenzspektrum neben der Grundschwingung noch sämtliche ungeradzahlige Oberwellen enthalten sind. Gerade dieser Oberwellengehalt trägt infolge von Interferenzerscheinungen mit Signalen in Nachbarkanälen oder mit Trägersignalen im Seitenband zu Störungen im Stereoempfang bei, die sich im hörbaren Bereich als Zwitschern bemerkbar machen. So führen z. B. die Oberwellen des 38 kHz Kanalschaltsignals zu Interferenzen mit den Nachbarkanälen, während das 19 kHz-Signal zur Pilottonunterdrückung hauptsächlich zu Interferenzen mit Signalen im Seitenband wie z. B. dem RDS-Träger führt.

Aus US-P 3 962 551 ist eine Methode zur Erzeugung eines mehrstufigen Schaltsignals bekannt, welches in Stereodekodern Verwendung findet. Dieses Schaltsignal wird durch Addition von zwei 60° phasenverschobenen 38 kHz Rechteckschwingungen erzeugt, wobei sich die dritten Oberwellen der Einzelschwingungen gegenseitig auslöschen. Das entstandene 38 kHz-Summensignal ist zwar frei von der dritten Oberwelle, enthält aber weiterhin ungeradzahlige Oberwellen höherer Ordnung. Die ebenfalls dort angegebene integrierte Schaltungsanordnung zur Erzeugung einer solchen Schwingung besteht aus einem Oszillator, einer dualen Frequenzteilerstufe, einem als Johnson-Counter geschalteten Schieberegister und einer Vielzahl von Logikgattern und ist daher sehr aufwendig zu gestalten. Zudem ist in einem auf diese Art erzeugten digitalen Schaltsignal die fünfte Oberwelle lediglich um 15 dB gegenüber der Grundschwingung abgesenkt, was noch zu erheblichen Interferenzerscheinungen führt.

Aus der US-P 4 506 376, von der ausgehend der Oberbegriff des Anspruchs 1 gebildet ist, ist ein Schaltsignal für einen Stereokodierer bekannt. Das Schaltsignal enthält weder die geradzahligen noch die dritte noch die fünfte Oberwelle und ist in der nachfolgenden Figur 5 dargestellt. Die Abbildung 5 zeigt das bekannte Signal. Bei den Amplitudenabstufungen werden die Amplitudenverhältnisse so gewählt, daß die dritte und die fünfte Oberwelle nicht mehr in dem Signal vorhanden sind. Der Signalverlauf sieht dabei wie folgt aus. Innerhalb einer Periode nimmt das Signal relativ zur maximalen Amplitude nacheinander die Werte (1+√2)⁻¹, 1, (1+√2)⁻¹, -(1+√2)⁻¹, -1, -(1+√2)⁻¹ an, wobei die Werte ±(1+√2)⁻¹ jeweils ein Achtel der Periode und die Werte ±1 jeweils ein Viertel der Periode anhalten.

Das Schaltsignal wird von der bekannten Anordnung in einer PLL-Regelschleife erzeugt, wobei innerhalb der Regelschleife ein spannungsgesteuerter Oszillator ein Dreiecksignal der Frequenz 76 kHz erzeugt. Das Dreiecksignal wird drei Komparatoren zugeführt, wovon der erste die obere Spitze, der zweite die untere Spitze und der dritte den Mittenbereich des Dreiecksignals detektiert. Die impulsförmigen Ausgangssignale der ersten beiden Komparatoren werden durch ein Flip-Flop zu einem Rechtecksignal zusammengefaßt, so daß mit dem Ausgangssignal des 3. Komparators zwei gleiche um 90° phasenverschobene Rechtecksignale vorliegen. Eines der beiden Rechtecksignale wird von einer Frequenzteilerstufe auf die halbe Eingangsfrequenz umgesetzt. Das andere Rechtecksignal und das Ausgangssignal der Frequenzteilerstufe werden den Eingängen eines XOR-Gatters zugeführt, dessen Ausgangssignal schließlich in einer Addierstufe mit dem Ausgangssignal der Frequenzteilerstufe additiv zum Schaltsignal verknüpft wird.

Der vorliegenden Erfindung liegt die Aufgabe zugrunde, einen integrierten Stereodekoder mit einer Schaltungsanordnung zur Erzeugung dieses bekannten, digitalen Schaltsignals anzugeben, der einfach aufgebaut ist.

Diese Aufgabe wird durch einen integrierten Stereodekoder mit den Merkmalen des Anspruchs 1 gelöst. Die vorteilhafte Ausgestaltung der Erfindung erfolgt gemäß den abhängigen Ansprüchen.

Im folgenden sei die Erfindung anhand der Figuren erläutert.

Figur 1 zeigt eine erfindungsgemäße Schaltungsanordnung zur Erzeugung eines oberwellenarmen, digitalen Signals.

Figur 2 zeigt die zur Erzeugung des oberwellenarmen Signals F notwendigen Teilsignale A - D.

Figur 3 und Figur 4 zeigen vorteilhafte Ausgestaltungen der erfindungsgemäßen Schaltungsanordnung.

Figur 5 zeigt den Verlauf und die Amplitudenverhältnisse des oberwellenarmen Signals.

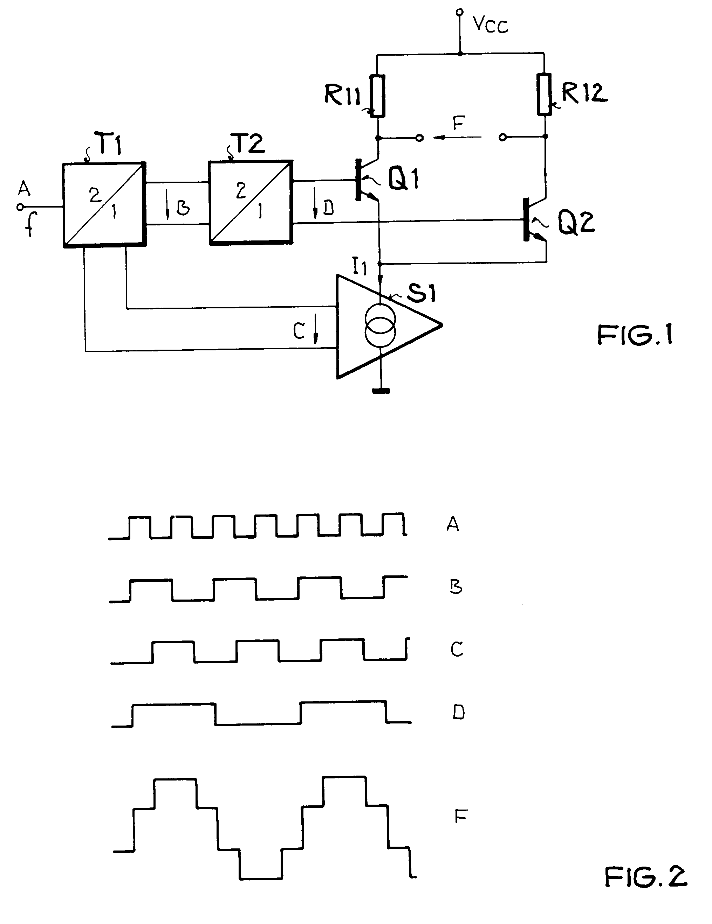

Eine erste Ausführungsform der erfindungsgemäßen Schaltungsanordnung zur Erzeugung des oben beschriebenen, digitalen Schaltsignals zeigt Figur 1. Ein Rechtecksignal A mit der Frequenz ƒ wird einer ersten dualen Frequenzteilerstufe T1 zugeführt, die zwei Ausgänge aufweist. An den beiden Ausgängen werden die symmetrischen Rechtecksignale B und C herausgeführt, die die halbe Eingangsfrequenz ƒ aufweisen. Das dritte Rechtecksignal C ist um 90° relativ zum zweiten Rechtecksignal B phasenverschoben. Das zweite Rechtecksignal B wird einem zweiten Frequenzteiler T2 zugeführt, wobei ausgangsseitig ein viertes Rechtecksignal D entsteht, welches wegen der zweifachen dualen Frequenzteilung ein Viertel der Eingangsfrequenz besitzt. Dieses vierte Rechtecksignal D wird den beiden Eingängen eines Differenzverstärkers zugeführt. Der Differenzverstärker besteht aus zwei Brückenzweigen, von denen jeder aus der Reihenschaltung von einem Widerstand R11, R12 und der Kollektoremitterstrecke eines Transistors Q1, Q2 besteht. Die Brückenzweige sind auf der Widerstandsseite gemeinsam an die Versorgungsspannung geführt. Die Verbindungspunkte von Widerstand und Kollektor stellen je einen Ausgang des Differenzverstärkers dar. Zwischen den beiden Ausgängen kann das Ausgangssignal F abgegriffen werden. In der gemeinsamen Emitterleitung der Transistoren liegt eine steuerbare Stromquelle S1. Dem Steuereingang der Stromquelle wird das Rechtecksignal C zugeführt, welches einen Phasenwinkel gegenüber dem Signal B aufweist. Dadurch wird der Strom I1 durch den Differenzverstärker im Takt von Signal C moduliert. Auf diese Weise wird dem langsamen Rechtecksignal D das schnellere Rechtecksignal C aufaddiert, wobei das Vorzeichen der Addition von der Richtung des vorausgegangenen Amplitudenwechsels des Rechtecksignals D bestimmt wird. Die Ströme, welche die steuerbare Stromquelle liefert, können so eingestellt werden, daß sich am Ausgangssignal F das Verhältnis der Amplitudenstufen gemäß Figur 5 ergibt.

Figur 2 zeigt den Signalverlauf der vier Rechtecksignale A-D, des Ausgangssignals F und ihre Phasenbeziehungen, wie zuvor anhand der erfindungsgemäßen Schaltungsanordnung beschrieben.

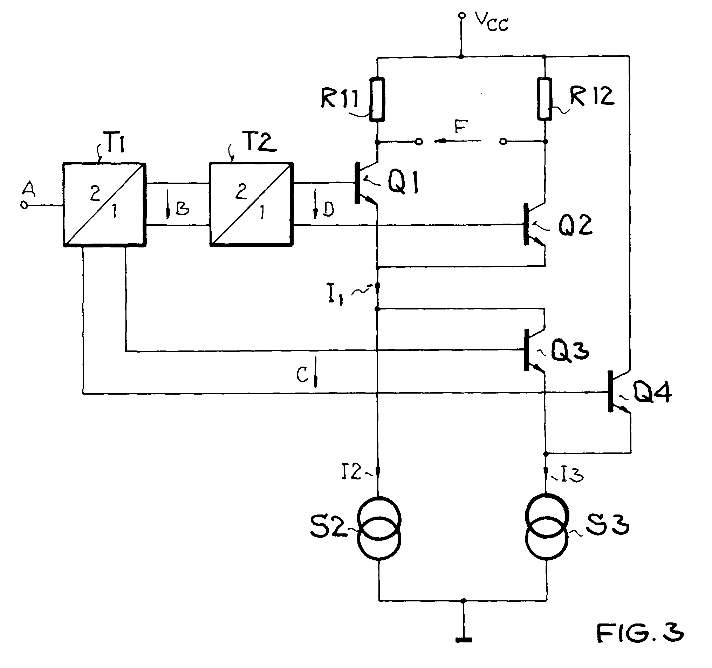

Figur 3 zeigt eine vorteilhafte Ausgestaltung der erfindungsgemäßen Schaltungsanordnung. Die regelbare Stromquelle S1 ist ersetzt durch zwei Konstantstromquellen S2, S3. Die erste Konstantstromquelle S2 ist an den gemeinsamen Emitteranschluß der beiden Transistoren Q1, Q2 des Differenzverstärkers angeschlossen und bestimmt so den Grundstrom durch den Differenzverstärker. Eine Differenzstufe bestehend aus einem dritten und einem vierten Transistor schaltet die zweite Konstantstromquelle S3 gesteuert durch das Rechtecksignal C entweder parallel zur ersten Stromquelle oder gegen die Versorgungsspannung. Die beiden Konstantstromquellen S2, S3 weisen einen gemeinsamen Masseanschluß auf. Der zweite Anschluß der ersten Konstantstromquelle S2 ist mit dem gemeinsamen Emitteranschluß der beiden Transistoren Q1, Q2 des Differenzverstärkers verbunden. Der zweite Anschluß der zweiten Konstantstromquelle S3 ist mit dem gemeinsamen Emitteranschluß des dritten und des vierten Transistors Q3, Q4 verbunden. Der Kollektor des dritten Transistors ist mit dem Emitteranschluß des Differenzverstärkers, der Kollektor des vierten Transistors mit der Versorgungsspannung verbunden. Den Basisanschlüssen des dritten und vierten Transistors wird das Rechtecksignal C zugeführt. Die Konstantstromquellen S2, S3 sind vorteilhaft so zu wählen, daß das Verhältnis der entsprechenden Ströme I2 und I3 sich zu I2:I3 = 1:√2 ergibt.

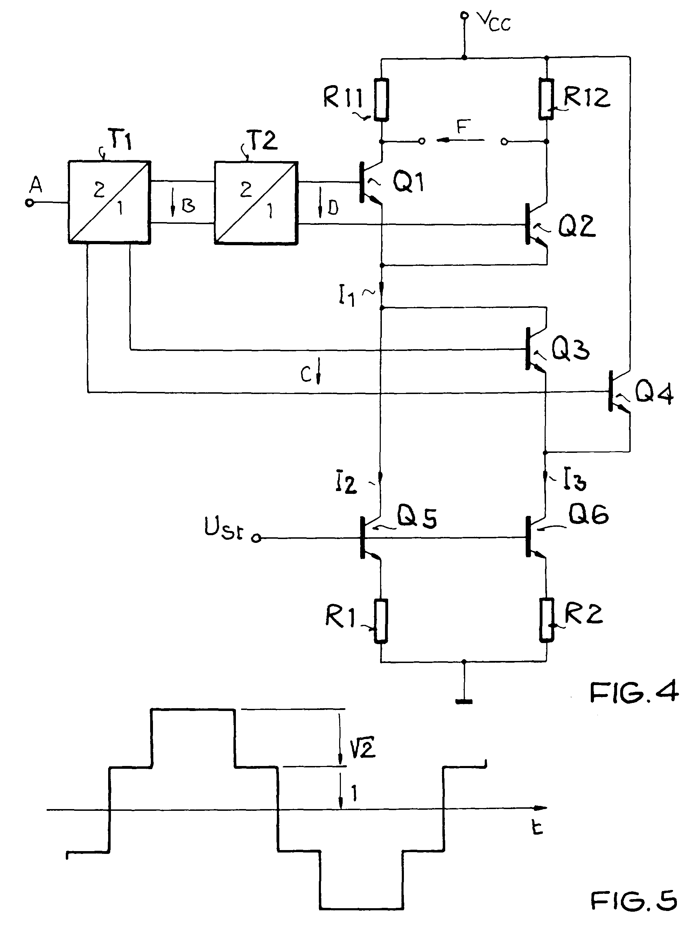

Die Figur 4 zeigt eine vorteilhafte Weiterführung der erfindungsgemäßen Schaltungsanordnung. Die beiden Konstantstromquellen S2, S3 sind durch jeweils eine Reihenschaltung von Transistorstromquelle Q5, Q6 und Widerstand R1, R2 ersetzt. Den beiden Transistorstromquellen Q5, Q6 wird an einem gemeinsamen Basisanschluß eine Steuerspannung U_{St} zugeführt. Stehen die Emitterflächen der Transistorstromquellen Q5, Q6 im umgekehrten Verhältnis wie die daran angeschlossenen Widerstände R1, R2, dann ist das Verhältnis der beiden Kollektorströme I2 und I3 unabhängig von der Steuerspannung U_{St}. Durch diese Maßnahme kann die Amplitude des Ausgangssignals F geändert werden, ohne das Verhältnis der Amplitudenstufen zu verändern. Auch in diesem Fall ist das Verhältnis der Ströme I2 zu I3 vorteilhaft wie 1:√2 zu wählen.

Die Erfindung stellt ein oberwellenarmes, digitales Schaltsignal für Stereodekoder zur Verfügung, welches sowohl bei der Pilottonunterdrückung als auch bei der Stereodekodierung Verwendung findet. Die Frequenz des Signals läßt sich durch die Wahl der Frequenz des Eingangssingals A an die Erfordernisse der Anwendung anpassen. Störungen, die sich aus Interferenzen der Oberwellen des Schaltsignals mit Nachbarkanälen bzw. Trägersignalen im Seitenband ergeben, sind weitgehend reduziert, da das oberwellenarme Schaltsignal nur ungeradzahlige Oberwellen ab der siebten Ordnung enthält.

## Patentansprüche

1. Integrierter Stereodecoder mit digitaler Decodierimpulserzeugung mittels einer Schaltungsanordnung zur Erzeugung eines periodischen, oberwellenarmen, treppenförmigen Signals, wobei das Signal innerhalb einer Periode und relativ zur maximalen Amplitude nacheinander die Werte (1+√2)⁻¹, 1, (1+√2)⁻¹, -(1+√2)⁻¹, -1, -(1+√2)⁻¹ annimmt, wobei die Werte ±(1+√2)⁻¹ jeweils ein Achtel der Periode und die Werte ±1 jeweils ein Viertel der Periode anhalten, mit einer ersten und einer zweiten dualen Frequenzteilerstufe (T1, T2) und Differenzverstärkern, dadurch gekennzeichnet,
- daß die erste duale Frequenzteilerstufe (T1) zwei Rechteckschwingungen (B, C) mit der halben Eingangsfrequenz (A) liefert, wobei die zweite Rechteckschwingung (C) zur ersten Rechteckschwingung (B) um 90° phasenverschoben ist,
- daß die erste Rechteckschwingung (B) der zweiten dualen Frequenzteilerstufe (T2) zugeführt wird, die eine dritte Rechteckschwingung (D) mit einem Viertel der Eingangsfrequenz (A) liefert,
- daß die dritte Rechteckschwingung (D) die Basiselektroden der beiden Transistoren (Q1, Q2) eines ersten Differenzverstärkers ansteuert,
- daß die Emitter der beiden Transistoren (Q1, Q2) mit einer gesteuerten Stromquelle (S1) verbunden sind, und
- daß die um 90° phasenverschobene zweite Rechteckschwingung (C) den Strom (I1) durch den ersten Differenzverstärker moduliert.

2. Integrierter Stereodecoder nach Anspruch 1, dadurch gekennzeichnet, daß die gesteuerte Stromquelle (S1) aus zwei Konstantstromquellen (S2, S3) und einem zweiten Differenzverstärker mit einem dritten und einem vierten Transistor (Q3, Q4) besteht, daß die um 90° phasenverschobene zweite Rechteckschwingung (C) die Basen des dritten Transistors (Q3) und des vierten Transistors (Q4) steuert, daß der Kollektor des dritten Transistors (Q3) mit den Emittern des ersten und des zweiten Transistors und der ersten Konstantstromquelle (S2) verbunden ist, daß die Emitter des dritten Transistors (Q3) und des vierten Transistors (Q4) mit der zweiten Konstantstromquelle (S3) verbunden sind.

3. Integrierter Stereodecoder nach Anspruch 2, dadurch gekennzeichnet, daß die erste Konstantstromquelle (S2) einen fünften Transistor (Q5) und die zweite Konstantstromquelle (S3) einen sechsten Transistor (Q6) aufweist, und daß an dem gemeinsamen Basisanschluß des fünften und sechsten Transistors eine Steuerspannung (U_{ST}) anliegt.

4. Integrierter Stereodecoder nach Anspruch 3, dadurch gekennzeichnet, daß der Kollektorstrom des fünften Transistors (Q5) zum Kollektorstrom des sechsten Transistors (Q6) im Verhältnis 1:√2 steht.

5. Integrierter Stereodecoder nach einem der Ansprüche 1 - 4, dadurch gekennzeichnet, daß das oberwellenarme Signal zur Pilottonunterdrückung dient.

6. Integrierter Stereodecoder nach einem der Ansprüche 1 - 4, dadurch gekennzeichnet, daß das oberwellenarme Signal zur Stereodekodierung dient.

## Claims

1. An integrated stereo decoder with digital decoder pulse generation by means of a circuit arrangement for the generation of a periodic, staircase signal of low harmonic content, where within one period and relative to the maximum amplitude the signal consecutively assumes the values (1+ √2)⁻¹, 1, (1+ √2)⁻¹, -(1+ √2)⁻¹, -1, -(1+ √2)⁻¹, where the values ±(1+ √2)⁻¹ in each case continue for one eighth of the period and the values ±1 in each case continue for one quarter of the period, with a first and a second dual frequency divider stage (T1, T2) and differential amplifiers, characterised in that
- the first dual frequency divider stage (T1) supplies two square waves (B, C) with half the input frequency (A), where the second square wave (C) is shifted in phase by 90° relative to the first square wave (B),
- that the first square wave (B) is supplied to the second dual frequency divider stage (T2) which supplies a third square wave (D) with one quarter of the input frequency (A),
- that the third square wave (D) drives the base electrodes of the two transistors (Q1, Q2) of a first differential amplifier,
- that the emitters of the two transistors (Q1, Q2) are connected to a controlled current source (S1) and
- that the second square wave (C), shifted in phase by 90°, modulates the current (I1) through the first differential amplifier.

2. An integrated stereo decoder as claimed in Claim 1, characterised in that the controlled current source (S1) consists of two constant current sources (S2, S3) and a second differential amplifier with a third and a fourth transistor (Q3, Q4), that the second square wave (C), shifted in phase by 90°, controls the bases of the third transistor (Q3) and of the fourth transistor (Q4), that the collector of the third transistor (Q3) is connected to the emitters of the first and second transistor and the first constant current source (S2), and that the emitters of the third transistor (Q3) and of the fourth transistor (Q4) are connected to the second constant current source (S3).

3. An integrated stereo decoder as claimed in Claim 2, characterised in that the first constant current source (S2) comprises a fifth transistor (Q5) and the second constant current source (S3) comprises a sixth transistor (Q6) and that a control voltage (U_{ST}) is applied to the common base terminal of the fifth and sixth transistors.

4. An integrated stereo decoder as claimed in Claim 3, characterised in that the collector current of the fifth transistor (Q5) has a ratio of 1: √2 to the collector current of the sixth transistor (Q6).

5. An integrated stereo decoder as claimed in one of Claims 1-4, characterised in that the signal with a low harmonic content is used for the pilot tone suppression.

6. An integrated stereo decoder as claimed in one of Claims 1-4, characterised in that the signal with a low harmonic content is used for the stereo decoding.

## Revendications

1. Décodeur stéréo intégré avec génération d'impulsions de décodage numériques au moyen d'un circuit de génération d'un signal en échelons périodique à faible taux d'harmoniques, le signal prenant à l'intérieur d'une période et par rapport à une amplitude maximale successivement les valeurs (1 + √2)⁻¹, 1, (1+ √2)⁻¹, -(1 + √2)⁻¹, -1, -(1 + √2)⁻¹, les valeurs ±(1 + √2)⁻¹ comportant respectivement un huitième de la période et les valeurs ±1 un quart de la période, avec un premier et un second étages diviseurs doubles (T1, T2), et des amplificateurs différentiels, caractérisé en ce que
- le premier étage diviseur de fréquence double (T1) délivre deux oscillations rectangulaires (B, C) à la moitié de la fréquence d'entrée (A), la seconde oscillation rectangulaire (C) étant déphasée de 90° par rapport à la première oscillation rectangulaire (B),
- en ce que la première oscillation rectangulaire (B) est appliquée au deuxième étage diviseur de fréquence double (T2), qui délivre une troisième oscillation rectangulaire (B) au quart de la fréquence d'entrée (A),
- en ce que la troisième oscillation rectangulaire (D) commande les électrodes de base des deux transistors (Q1, Q2) d'un premier amplificateur différentiel,
- en ce que les émetteurs des deux transistors (Q1, Q2) sont reliés à une source de courant commandée (S1), et
- en ce que la seconde oscillation rectangulaire déphasée de 90° (C) module le courant (I1) traversant le premier amplificateur différentiel.

2. Décodeur stéréo intégré selon la revendication 1, caractérisé en ce que la source de courant commandée (S1) se compose de deux sources à courant constant (S2, S3) et d'un second amplificateur différentiel avec un troisième et un quatrième transistors (Q3, Q4), en ce que la seconde oscillation rectangulaire (C) déphasée de 90° commande les bases du troisième transistors (Q3) et du quatrième transistors (Q4), en ce que le collecteur du troisième transistor (Q3) est relié aux émetteurs des premier et second transistors et à la première source à courant constant (S2), en ce que les émetteurs du troisième transistor (Q3) et du quatrième transistor (Q4) sont reliés à la seconde source à courant constant (S3).

3. Décodeur stéréo intégré selon la revendication 2, caractérisé en ce que la première source à courant constant (S2) comporte un cinquième transistor (Q5) et la seconde source à courant constant (S3) un sixième transistor (Q6), et qu'à la borne de base commune du cinquième et du sixième transistor est appliquée une tension de commande (Uₛₜ).

4. Décodeur stéréo intégré selon la revendication 3, caractérisé en ce que le courant de collecteur du cinquième transistor (Q5) par rapport au courant de collecteur du sixième transistor (Q6) présente un rapport 1: √2.

5. Décodeur stéréo intégré selon l'une quelconque des revendications 1 à 4, caractérisé en ce que le signal à faible taux d'harmoniques sert à la suppression de la fréquence pilote.

6. Décodeur stéréo intégré selon l'une quelconque des revendications 1 à 4, caractérisé en ce que le signal à faible taux d'harmoniques sert au décodage stéréo.
